# FASCICULE DE BREVET EUROPEEN

(11) **EP 0 680 696 B1**
(45) Date de publication et mention de la délivrance du brevet: **10.10.2001**
(21) Numéro de dépôt: 95201072.6
(22) Date de dépôt: 26.04.1995
(51) Int. Cl.: A23C 19/086, A23C 19/09

(54) **Procédé pour la réalisation d'un produit fromager**
Verfahren zur Herstellung eines Käseprodukts
Process for preparing a cheese product

(30) Priorité: 05.05.1994 BE 9400468
(43) Date de publication de la demande: 08.11.1995
(73) Titulaire: KAASMAKERIJ PASSENDALE, naamloze vennootschap., B-8980 Passendale (BE)
(72) Inventeur: Tamboryn, Erik, B-9840 De Pinte (BE); de Praeter, Hans, B-8980 Passendale (BE)
(74) Mandataire: Debrabandere, René

(56) Documents cités:
- EP-A- 0 278 179
- DE-A- 2 737 395
- FR-A- 1 087 717
- FR-A- 1 270 135
- FR-A- 2 567 367
- US-A- 2 683 665
- DATABASE WPI Week 8917 Derwent Publications Ltd., London, GB; AN 89-124594 & HU-A-47 403 (NEMETH P.)
- PATENT ABSTRACTS OF JAPAN vol. 16 no. 40 (C-906) ,31 Janvier 1992 & JP-A-03 247237 (SNOW BRAND MILK PROD CO)

## Description

L'invention concerne un procédé pour la réalisation d'un produit fromager pour la préparation de plats ou de composants de plats, selon lequel on fait fondre une quantité de fromage à titre de composant de base jusqu'à ce que l'on obtienne une forme plus ou moins liquide, on ajoute à ce fromage plus ou moins liquide et encore chaud au moins un ingrédient fonctionnel, et on mélange une quantité de ce mélange homogène avec une quantité de fromage naturel moulu ou râpé d'au moins une sorte.

Ces plats ou composants de plats peuvent être des plats au fromage, tels qu'une fondue au fromage, des sauces au fromage ou des farces au fromage, ou bien il peut s'agir de plats qui sont gratinés, tels que du jambon avec des endives, etc.

Pour la préparation de plats ou de composants de plats de ce type, le consommateur utilise du fromage râpé ou moulu en mélangeant les ingrédients nécessaires. Fréquemment, il utilise, en l'occurence, des recettes dont l'exécution prend du temps et est compliquée, et dans laquelle une certaine expérience culinaire est requise.

Selon un procédé décrit dans US-A-2.683.665, du fromage gras naturel est fondu avec un émulsifiant tel que le sodium phoshate et ensuite séché par chauffage jusqu'à ce que le degré d'humidité soit situé entre 2 et 3 %. Après ou pendant ce chauffage le fromage est réduit en particules, après quoi ce fromage traité est mélangé à du fromage naturel non traité, qui a été séché à l'air chaud et moulu. Finalement le mélange est encore réchauffé dans une atmosphère peu humide à la température à laquelle la graisse dans le fromage naturel est séparée des autres constituants.

L'addition de l'émulsifiant et le réchauffage ont pour résultat que les particules du fromage ne s'agglomèrent pas à température ambiante, mais ce fromage doit encore être mélangé aux ingrédients nécessaires pour préparer par exemple un gratin, une sauce au fromage, une farce ou une fondue au fromage.

Il existe déjà des plats tout préparés avec du fromage dans le commerce, mais le fromage y est seulement présent à titre de constituant secondaire ou n'est plus reconnaissable comme tel. Ceci est par exemple le cas dans des produits déshydratés pour de la sauce au fromage ou dans des préparations prêtes à l'emploi de fondue au fromage sous forme d'une pâte ou sous forme liquide.

L'invention a pour objet de créer un procédé pour la réalisation d'un produit fromager, avec lequel on peut réaliser un produit fromager qui, non seulement ne peut être distingué à l'oeil nu du fromage moulu, mais qui permet, en outre, de préparer, d'une manière simple et très rapide et avec une garantie de réussite de 100%, les plats ou les composants de plats précités avec du fromage.

Cet objet est réalisé conformément à l'invention par le fait que dans un procédé selon le premier paragraphe, on réalise un produit fromager que l'on peut utiliser comme tel dans toutes sortes de plats gratinés et qu'on mélange comme ingrédients fonctionnels au fromage fondu entre 3 et 10 % en poids de la chapelure et des sucres, après quoi on laisse le mélange refroidir et coaguler, on râpe ou on moud ce mélange refroidi et on mélange de 20 à 70% en poids de ce mélange râpé ou moulu avec une quantité entre 80 et 30% en poids de fromage naturel moulu ou râpé d'au moins une sorte, les pour cent en poids étant calculés sur le poids total du produit fromager.

Cet objet est également réalisé conformément à l'invention par le fait que dans un procédé selon le premier paragraphe, on réalise un produit fromager comme composant de base pour la préparation d'une sauce au fromage ou bien pour une fondue, et on mélange comme ingrédients fonctionnels au fromage fondu entre 4 et 12 % en poids de stabilisateurs et de 1 à 2 % en poids d'épaississants, dans le premier cas, et entre 4 et 10 % en poids de stabilisateurs et de 1 à 2 % en poids d'épaississants pour la fondue, après quoi on laisse dans les deux cas le mélange refroidir et coaguler, on râpe ou on moud ce mélange refroidi et on mélange de 20 à 70% en poids de ce mélange râpé ou moulu avec une quantité entre 80 et 30% en poids de fromage naturel moulu ou râpé d'au moins une sorte, les pour cent en poids étant calculés sur le poids total du produit fromager.

Par le fait que le produit est constitué, pour une part, de fromage qui a été fondu et auquel on ajoute un ou plusieurs ingrédients spécifiques, ces ingrédients conservent leurs propriétés fonctionnelles qui ne se manifestent que lors de l'utilisation finale et donc le réchauffement par le consommateur. Ces propriétés fonctionnelles sont, par exemple, la liaison avec un composant liquide pour obtenir la consistance désirée dans des sauces, des farces ou des fondues, ou encore la formation de croûtes et la coloration brun doré simultanée dans des gratins. En utilisant le produit fromager par exemple pour des gratins, la coloration brun doré ne va pas se déclencher au cours du processus de production, mais seulement au cours du réchauffement par le consommateur.

En outre, par ce procédé, on évite l'intervention d'une démixtion dans le produit fromager avant de l'utiliser. Il n'est plus possible de distinguer à l'oeil nu le produit fromager du fromage moulu classique.

FR-A-1.087.717 décrit un procédé de fabrication d'un produit fromager pour la préparation de potages, selon lequel un fromage à pâte dure est broyé et mélangé avec de la poudre de légumes éventuellement mélangée avec de la biscotte et d'autres ingrédients tels que des émulsifiants, un stabilisateur et des condiments. Le mélange global est fondu, malaxé, refroidi et rapé.

Ce produit est utilisé en tant que tel, sans que du fromage non traité y soit ajouté.

FR-A-2.567.367 décrit l'addition de sels de fonte et d'agents d'aromatisation et d'autres additifs à des particules de fromage. Ce mélange est ensuite fondu, refroidi et rapé.

HU-A-47.403 décrit un mélange sec consistant en du fromage frais séché et moulu et des additifs tels que de l'amidon, des condiments, un émulsifiant et un stabilisateur.

Patents abstracts of Japan, vol. 16 no 40 (C-906) décrit un mélange de fromage naturel et du fromage comprenant 10 à 20% de stabilisateur tel que de la gélatine.

Le produit fromager que l'on obtient selon l'invention est utilisable tel quel dans toutes sortes de plats gratinés.

Pour une utilisation de ce type, on ajoute, comme ingrédients fonctionnels, de la chapelure et des sucres.

Le produit fromager obtenu peut également être utilisé comme composant principal pour la préparation de sauces, de farces ou de fondues; dans quel cas, il suffit d'ajouter au produit fromager un composant liquide tel que du lait, du vin ou de la bière et de réchauffer jusqu'à ce que le produit soit complètement fondu.

Pour ces applications, on ajoute, comme ingrédients fonctionnels, des épaississants et des stabilisateurs.

Pour toutes les applications précitées, on peut ajouter, outre les ingrédients fonctionnels, d'autres ingrédients tels qu'un ou plusieurs ingrédients choisis parmi le groupe ci-après : du sel, des arômes, des épices.

Par l'expression "fromage naturel", on désigne ici du fromage habituel dur ou semi-dur qui n'a pas été fondu. Des fromages de ce type sont l'emmenthal, le comté, le gouda, le parmesan, etc. La quantité de fromage naturel ajoutée peut être un mélange de deux ou de plusieurs sortes de fromages naturels.

D'autres particularités et avantages de l'invention se dégageront de la description ci-après d'un procédé pour la réalisation d'un produit fromager selon l'invention. Cette description esc donnée uniquement à titre d'exemple et ne limite pas l'invention.

Pour réaliser un nouveau produit fromager conformément à l'invention, on fond tout d'abord une quantité de fromage à titre de composant de base pour obtenir une masse plus ou moins liquide.

Ce fromage peut être de n'importe quelle sorte et il s'agit par exemple de fromage habituel dur du type emmenthal, gouda, parmesan ou analogues, ou encore d'un mélange de deux de ces sortes ou plus.

A ce fromage plus ou moins liquide et encore chaud qui possède une température entre 60 et 90°C, on ajoute les ingrédients nécessaires que l'on mélange de manière homogène avec le fromage.

Ces ingrédients comprennent des agents pour influencer le goût, tels que du sel, des arômes et des épices, et comprennent également au moins un ingrédient fonctionnel qui possède des propriétés fonctionnelles déterminées qui ne se manifestent que lors de l'utilisation finale du produit fromager par le consommateur.

Des ingrédients fonctionnels de ce type sont des épaississants, des stabilisateurs ou encore de la chapelure et des sucres, le choix des ingrédients étant, bien entendu, déterminé par l'application pour laquelle le produit fromager sera utilisé.

La quantité totale d'ingrédients fonctionnels se situe entre 1 et 12% en poids.

Ces pour cent et tous les pour cent mentionnés ci-après sont calculés par rapport au poids total du produit fromager.

Après le mélange homogène, on laisse refroidir le mélange jusqu'à ce que l'on obtienne un bloc solide.

Dans une deuxième phase, on râpe ou on moud le bloc et on mélange de 20 à 70% en poids, de préférence de 40 à 60% en poids, calculés sur le poids total du produit fromager final du mélange râpé ou moulu précité avec 80 à 30% en poids ou de préférence de 60 à 40% en poids de fromage naturel moulu ou râpé, constitué par une ou plusieurs sortes de fromages.

Comme fromage naturel, on peut utiliser n'importe quelle sorte de fromage, mais de préférence on utilise une ou plusieurs sortes de fromages durs, telles que l'emmenthal, le comté, le gruyère ou le parmesan.

Le mélange est enfin conditionné et mis sur le marché.

On ne peut plus distinguer du fromage moulu classique, le produit fromager ainsi obtenu. En fonction des ingrédients fonctionnels, ce produit fromager peut être utilisé directement comme tel, par exemple pour les gratins, ou bien il peut être utilisé après mélange avec un composant liquide tel que du lait, du vin ou de la bière et après réchauffement jusqu'à ce que le produit fromager soit complètement fondu, pour la réalisation de sauce au fromage, de farce au fromage ou de fondue.

Pour l'utilisation destinée à des gratins, on ajoute, comme ingrédients fonctionnels, de la chapelure et des sucres tels que du sirop de glucose séché et du dextrose en une quantité totale qui se situe de préférence entre 3 et 10% en poids.

Si on le souhaite, on ajoute des arômes conjointement aux ingrédients fonctionnels.

Le produit fromager pour gratins peut être utilisé comme tel et procure une belle croûte croquante brun doré plus rapidement et à une température inférieure par rapport aux fromages moulus classiques, le risque de brûler le fromage étant inférieur à celui que l'on trouve dans ce fromage moulu classique. Il suffit de le faire fondre, si bien que l'on peut obtenir la croûte sans gril et donc également dans un four à micro-ondes.

Pour la préparation d'une sauce au fromage, on ajoute, comme ingrédients fonctionnels, des épaississants de préférence dissous dans de l'huile végétale et dans des quantités qui se situent de préférence entre 1 et 2% en poids, et on ajoute des stabilisateurs, de préférence dans des quantités qui se situent entre 4 et 12% en poids. Des épaississants appropriés sont par exemple de la farine de graines de caroube, tandis que des stabilisateurs appropriés sont par exemple la maltodextrine, l'amidon modifié ou encore un mélange des deux dans un rapport entre 1:3 et 2:3.

Dans ce cas-ci également, on peut ajouter des ingrédients supplémentaires à la masse fondue, tels que de 1 à 2% en poids de sel, d'arômes et d'épices. Un arôme approprié peut être un arôme butyreux, tandis que des épices appropriées peuvent être du poivre et de la noix de muscade.

Au produit fromager destiné à de la sauce au fromage, le consommateur ne doit ajouter qu'un composant liquide tel que du lait, par exemple 150 ml de lait pour 125 g de produit fromager, et réchauffer le tout jusqu'à ce que le produit fromager soit fondu, ce qui ne nécessite normalement qu'un laps de temps de quelques minutes à 5 minutes.

Pour la préparation d'une fondue, on ajoute les mêmes ingrédients fonctionnels que pour la sauce au fromage avec une quantité totale entre 4 et 10%. Comme arômes, on peut également ajouter de l'ail et de l'arôme de kirsch.

A ce produit fromager destiné à une fondue, le consommateur ne doit ajouter que du vin blanc ou de la bière, par exemple 150 ml pour 250 g de produit fromager, et réchauffer le tout jusqu'à ce que le produit fromager soit complètement fondu, ce qui nécessite, la plupart du temps, seulement à peu près 5 minutes.

L'invention sera expliquée plus en détail à l'aide des exemples ci-après :

### 1. Produit fromager pour une sauce au fromage :

Dans une cuve, on fait fondre 4 kg de fromage emmenthal et on le mélange avec 150 g de farine de graines de caroube, 400 g de maltodextrine, 400 g d'amidon modifié, 150 g de sel, 10 g d'arôme butyreux, 10 g de poivre et 10 g de noix de muscade.

Après coagulation, on râpe ce mélange et on le mélange avec 5 kg de fromage gruyère râpé; après quoi, on conditionne le produit final.

En ajoutant 150 ml de lait par 125 g du produit fromager et en réchauffant jusqu'à ce que le fromage soit fondu, on obtient une sauce au fromage que l'on ne peut plus distinguer de la sauce au fromage préparée par le consommateur lui-même à partir de fromage moulu.

### 2. Produit fromager pour fondue :

Dans une cuve, on fait fondre 4 kg de fromage emmenthal et on le mélange avec 150 g de farine de graines de caroube, 350 g de maltodextrine, 350 g d'amidon modifié, 150 g de sel, 10 g d'ail, 10 g d'arôme de kirsch, 10 g de poivre et 10 g de noix de muscade.

Après coagulation, on râpe ce mélange et on le mélange avec 5 kg de fromage emmenthal râpé; après quoi, on conditionne le produit final.

En ajoutant 150 ml de vin par 250 g du produit fromager et en réchauffant jusqu'à ce que le fromage soit fondu, on obtient une fondue.

### 3. Produit fromager pour gratins :

Dans une cuve, on fait fondre 4 kg d'un mélange de fromage de parmesan et de gruyère et on mélange avec 170 g de chapelure et 30 g d'un mélange de sirop de glucose séché et de dextrose.

Après coagulation, on râpe ce mélange et on le mélange avec 5 kg de fromage gruyère râpé; après quoi, on conditionne le produit final.

Après l'avoir répandu sur un plat tel que du jambon avec des endives et après réchauffement dans le four, on obtient une croûte brun doré croquante sur le plat.

Par le procédé décrit ci-avant pour la préparation, on obtient un prcduit final qui ne peut plus être distingué d'un fromage habituel râpé ou moulu, mais qui permet au consommateur, d'une manière extrêmement simple et rapide, d'obtenir un plat avec du fromage, par exemple une sauce au fromage, une farce au fromage, une fondue ou un gratin et ceci avec une garantie de réussite de 100%.

Pour le consommateur, le fromage reste nettement reconnaissable. Aucune démixtion des ingrédients n'a lieu dans l'emballage.

Par le choix approprié de la sorte ou des sortes de fromages naturels que l'on utilise et par le choix des ingrédients qui sont ajoutés au composant de base de fromage liquide, on peut obtenir un nombre de goûts pratiquement illimités.

L'invention n'est en aucune façon limitée aux formes de réalisation décrites ci-avant et, tout en restant dans le cadre de la demande de brevet, on peut apporter un grand nombre de modifications aux formes de réalisation décrites.

Ainsi, aussi bien pour la réalisation du composant de fromage que l'on rend plus ou moins liquide et auquel on ajoute les ingrédients que pour le fromage naturel avec lequel on mélange ce composant de fromage, on peut utiliser d'autres sortes de fromages que les sortes données ci-dessus à titre d'exemple.

De même, on peut utiliser d'autres ingrédients aussi bien fonctionnels que complémentaires que ceux décrits ci-dessus.

## Revendications

1. Procédé pour la réalisation d'un produit fromager pour la préparation de plats ou de composants de plats, selon lequel on fait fondre une quantité de fromage à titre de composant de base jusqu'à ce que l'on obtienne une forme plus ou moins liquide, on ajoute à ce fromage plus ou moins liquide et encore chaud au moins un ingrédient fonctionnel et on mélange une quantité de ce mélange homogène avec une quantité de fromage naturel moulu ou râpé d'au moins une sorte, **caractérisé en ce qu'**on réalise un produit fromager que l'on peut utiliser comme tel dans toutes sortes de plats gratinés et qu'on mélange comme ingrédients fonctionnels au fromage fondu entre 3 et 10 % en poids de la chapelure et des sucres, après quoi on laisse le mélange refroidir et coaguler, on râpe ou on moud ce mélange refroidi et on mélange de 20 à 70% en poids de ce mélange râpé ou moulu avec une quantité entre 80 et 30% en poids de fromage naturel moulu ou râpé d'au moins une sorte, les pour cent en poids étant calculés sur le poids total du produit fromager.

2. Procédé selon la revendication précédente, **caractérisé en ce qu'**on mélange de 40 à 60% en poids du mélange râpé ou moulu avec de 60 à 40% en poids de fromage naturel moulu ou râpé.

3. Procédé selon la revendication 1 ou 2, **caractérisé en ce qu'**on ajoute, outre de la chapelure et des sucres d'autres ingrédients tels qu'un ou plusieurs ingrédients choisis parmi le groupe ci-après: du sel, des arômes, des épices.

4. Procédé pour la réalisation d'un produit fromager pour la préparation de plats ou de composants de plats, selon lequel on fait fondre une quantité de fromage à titre de composant de base jusqu'à ce que l'on obtienne une forme plus ou moins liquide, on ajoute à ce fromage plus ou moins liquide et encore chaud au moins un ingrédient fonctionnel et on mélange une quantité de ce mélange homogène avec une quantité de fromage naturel moulu ou râpé d'au moins une sorte, **caractérisé en ce qu'**on réalise un produit fromager comme composant de base pour la préparation d'une sauce au fromage, et qu'on mélange comme ingrédients fonctionnels au fromage fondu entre 4 et 12 % en poids de stabilisateurs et de 1 à 2 % en poids d'épaississants, après quoi on laisse le mélange refroidir et coaguler, on râpe ou on moud ce mélange refroidi et on mélange de 20 à 70% en poids de ce mélange râpé ou moulu avec une quantité entre 80 et 30% en poids de fromage naturel moulu ou râpé d'au moins une sorte, les pour cent en poids étant calculés sur le poids total du produit fromager.

5. Procédé selon la revendication précédente, **caractérisé en ce qu'**on mélange de 40 à 60% en poids du mélange râpé ou moulu avec de 60 à 40% en poids de fromage naturel moulu ou râpé.

6. Procédé selon la revendication 4 ou 6, **caractérisé en ce qu'**on ajoute, outre du stabilisateur et de l'épaississant, d'autres ingrédients tels qu'un ou plusieurs ingrédients choisis parmi le groupe ci-après : du sel, des arômes, des épices.

7. Procédé pour la réalisation d'un produit fromager pour la préparation de plats ou de composants de plats, selon lequel on fait fondre une quantité de fromage à titre de composant de base jusqu'à ce que l'on obtienne une forme plus ou moins liquide, on ajoute à ce fromage plus ou moins liquide et encore chaud au moins un ingrédient fonctionnel et on mélange une quantité de ce mélange homogène avec une quantité de fromage naturel moulu ou râpé d'au moins une sorte, **caractérisé en ce qu'**on réalise un produit fromager pour fondue, et qu'on mélange comme ingrédients fonctionnels au fromage fondu entre 4 et 10 % en poids de stabilisateurs et de 1 à 2 % en poids d'épaississants, après quoi on laisse le mélange refroidir et coaguler, on râpe ou on moud ce mélange refroidi et on mélange de 20 à 70% en poids de ce mélange râpé ou moulu avec une quantité entre 80 et 30% en poids de fromage naturel moulu ou râpé d'au moins une sorte, les pour cent en poids étant calculés sur le poids total du produit fromager.

8. Procédé selon la revendication précédente, **caractérisé en ce qu'**on mélange de 40 à 60% en poids du mélange râpé ou moulu avec de 60 à 40% en poids de fromage naturel moulu ou râpé.

9. Procédé selon la revendication 7 ou 8, **caractérisé en ce qu'**on ajoute, comme stabilisateurs, de la maltodextrine et de l'amidon modifié et, comme épaississants, de la farine de graines de caroube dissoute au préalable dans de l'huile végétale.

10. Procédé selon l'une quelconque des revendications 7 à 9, **caractérisé en ce qu'**on ajoute, outre du stabilisateur et de l'épaississant, d'autres ingrédients tels qu'un ou plusieurs ingrédients choisis parmi le groupe ci-après : du sel, des arômes, des épices.

## Claims

1. Method for making a cheese product for preparing dishes or constituents of dishes, according to which a quantity of cheese as a basic constituent is made to melt until a more or less liquid state is obtained, whereby at least one functional ingredient is added to the more or less liquid cheese while it is still warm, and a quantity of this homogenous mixture is mixed with a quantity of natural ground or grated cheese of at least one sort, **characterised in that** a cheese product is made which can be used as such in all sorts of dishes au gratin and which is mixed as a functional ingredient to melted cheese in a ratio of between 3 and 10 % by weight of the breadcrumbs and sugars, after which the mixture is left to cool and to coagulate, whereby the cooled mixture is grated or ground, and 20 to 70 % by weight of this grated or ground mixture is mixed with a quantity of between 80 and 30 % by weight of natural grated or ground cheese of at least one sort, whereby the percentages by weight are calculated on the basis of the total weight of the cheese product.

2. Method according to the preceding claim, **characterised in that** 40 to 60 % by weight of the grated or ground mixture is mixed to 60 to 40 % by weight of natural ground or grated cheese.

3. Method according to claim 1 or 2, **characterised in that**, apart from the breadcrumbs and sugars, also other ingredients are added such as one or several ingredients selected from the following group: salt, flavours, spices.

4. Method for making a cheese product for preparing dishes or constituents of dishes, according to which a quantity of cheese as a basic constituent is made to melt until a more or less liquid state is obtained, whereby at least one functional ingredient is added to the more or less liquid cheese while it is still warm, and a quantity of this homogenous mixture is mixed with a quantity of natural ground or grated cheese of at least one sort, **characterised in that** a cheese product is made which is used as a basic constituent for preparing a cheese sauce, and **in that** between 4 and 12 % by weight of stabilisers and between 1 and 2 % by weight of thickening agents are added as functional ingredients to the melted cheese, after which the mixture is left to cool and to coagulate, whereby the cooled mixture is grated or ground, and 20 to 70 % by weight of this grated or ground mixture is mixed with a quantity of between 80 and 30 % by weight of natural grated or ground cheese of at least one sort, whereby the percentages by weight are calculated on the basis of the total weight of the cheese product.

5. Method according to the preceding claim, **characterised in that** 40 to 60 % by weight of the grated or ground mixture is mixed to 60 to 40 % by weight of natural ground or grated cheese.

6. Method according to claim 4 or 6, **characterised in that**, apart from the stabiliser and thickening agent, also other ingredients are added such as one or several ingredients selected from the following group: salt, flavours, spices.

7. Method for making a cheese product for preparing dishes or constituents of dishes, according to which a quantity of cheese as a basic constituent is made to melt until a more or less liquid state is obtained, whereby at least one functional ingredient is added to the more or less liquid cheese while it is still warm, and a quantity of this homogenous mixture is mixed with a quantity of natural ground or grated cheese of at least one sort, **characterised in that** a cheese product is made which is used for fondue, and **in that** between 4 and 12 % by weight of stabilisers and between 1 and 2 % by weight of thickening agents are added as functional ingredients to the melted cheese, after which the mixture is left to 'cool and to coagulate, whereby the cooled mixture is grated or ground, and 20 to 70 % by weight of this grated or ground mixture is mixed with a quantity of between 80 and 30 % by weight of natural grated or ground cheese of at least one sort, whereby the percentages by weight are calculated on the basis of the total weight of the cheese product.

8. Method according to the preceding claim, **characterised in that** 40 to 60 % by weight of the grated or ground mixture is mixed to 60 to 40 % by weight of natural ground or grated cheese.

9. Method according to claim 7 or 8, **characterised in that** malto-dextrin and modified starch are used as stabilisers, and carob meal which has been dissolved first in vegetable oil are used as thickening agents.

10. Method according to any of claims 7 to 9, **characterised in that**, apart from the stabiliser and thickening agent, also other ingredients are added such as one or several ingredients selected from the following group: salt, flavours, spices.

## Patentansprüche

1. Verfahren zur Herstellung eines Käseprodukts zur Zubereitung von Gerichten oder Bestandteilen von Gerichten, gemäß dessen man eine Quantität Käse als Basisbestandteil schmilzt, bis man eine mehr oder weniger flüssige Form erhält, man zu diesem mehr oder weniger flüssigen und noch warmen Käse zumindest eine funktionelle Zutat hinzufügt und man eine Quantität dieser homogenen Mischung mit einer Quantität gemahlenem oder geriebenem Naturkäse zumindest einer Sorte vermischt, **dadurch gekennzeichnet, dass** man ein Käseprodukt verwirklicht, das man als solches bei allen Arten von gratinierten Gerichten verwenden kann und dass man als funktionelle Bestandteile zum geschmolzenen Käse zwischen 3 und 10 Gewichtsprozent Paniermehl und Zucker beimischt, wonach man die Mischung abkühlen und erstarren lässt, man die abgekühlte Mischung reibt oder mahlt und man 20 bis 70 Gewichtsprozent dieser geriebenen oder gemahlenen Mischung mit einer Quantität zwischen 80 und 30 Gewichtsprozent gemahlenem oder geriebenem Naturkäse zumindest einer Sorte mischt, wobei die Gewichtsprozente auf das Gesamtgewicht des Käseprodukts berechnet sind.

2. Verfahren gemäß dem vorgenannten Anspruch, **dadurch gekennzeichnet, daß** man 40 bis 60 Gewichtsprozent der geriebenen oder gemahlenen Mischung mit 60 bis 40 Gewichtsprozent gemahlenem oder geriebenem Naturkäse mischt.

3. Verfahren gemäß Anspruch 1 oder 2, **dadurch gekennzeichnet, dass** man außer Paniermehl und Zucker andere Bestandteile hinzufügt, wie etwa ein oder mehrere Bestandteile, gewählt aus der folgenden Gruppe: Salz, Aromastoffe, Gewürze.

4. Verfahren zur Verwirklichung eines Käseprodukts zur Zubereitung von Gerichten oder Bestandteilen von Gerichten, gemäß dessen man eine Quantität Käse als Basisbestandteil schmilzt, bis man eine mehr oder weniger flüssige Form erhält, man zu diesem mehr oder weniger flüssigen und noch warmen Käse zumindest eine funktionelle Zutat hinzufügt und man eine Quantität dieser homogenen Mischung mit einer Quantität gemahlenem oder geriebenen Naturkäse zumindest einer Sorte vermischt, **dadurch gekennzeichnet, dass** man ein Käseprodukt als Basisbestandteil für die Zubereitung einer Käsesoße verwirklicht, und dass man als funktionelle Zutaten zu dem geschmolzenen Käse zwischen 4 und 12 Gewichtsprozent Stabilisatoren und 1 bis 2 Gewichtsprozent Verdickungsmittel hinzumischt, wonach man die Mischung abkühlen und erstarren läßt, man die abgekühlte Mischung reibt oder mahlt und man 20 bis 70 Gewichtsprozent dieser geriebenen oder gemahlenen Mischung mit einer Quantität zwischen 80 und 30 Gewichtsprozent gemahlenem oder geriebenem Naturkäse zumindest einer Sorte mischt, wobei die Gewichtsprozente auf das Gesamtgewicht des Käseprodukts berechnet sind.

5. Verfahren gemäß dem vorgenannten Anspruch, **dadurch gekennzeichnet, dass** man 40 bis 60 Gewichtsprozent geriebener oder gemahlener Mischung mit 60 bis 40 Gewichtsprozent gemahlenem oder geriebenem Naturkäse mischt.

6. Verfahren gemäß Anspruch 4 oder 6, **dadurch gekennzeichnet, dass** man außer dem Stabilisator und Verdickungsmittel andere Bestandteile hinzufügt, wie etwa ein oder mehrere Bestandteile, gewählt aus der folgenden Gruppe: Salz, Aromastoffe, Gewürze.

7. Verfahren zur Verwirklichung eines Käseprodukts zur Zubereitung von Gerichten oder Bestandteilen von Gerichten, gemäß dessen man eine Quantität Käse als Basisbestandteil schmilzt, bis man eine mehr oder weniger flüssige Form erhält, man zu diesem mehr oder weniger flüssigen und noch warmen Käse zumindest eine funktionelle Zutat hinzufügt und man eine Quantität dieser homogenen Mischung mit einer Quantität gemahlenem oder geriebenem Naturkäse zumindest einer Sorte vermischt, **dadurch gekennzeichnet, dass** man ein Käseprodukt für Fondue verwirklicht, und dass man als funktionelle Zutaten zu dem geschmolzenen Käse zwischen 4 und 10 Gewichtsprozent Stabilisatoren und 1 bis 2 Gewichtsprozent Verdickungsmittel hinzumischt, wonach man die Mischung abkühlen und erstarren läßt, man die abgekühlte Mischung reibt oder mahlt und man 20 bis 70 Gewichtsprozent dieser geriebenen oder gemahlenen Mischung mit einer Quantität zwischen 80 und 30 Gewichtsprozent gemahlenem oder geriebenem Naturkäse zumindest einer Sorte mischt, wobei die Gewichtsprozente auf das Gesamtgewicht des Käseprodukts berechnet sind.

8. Verfahren gemäß dem vorgenannten Anspruch, **dadurch gekennzeichnet, dass** man 40 bis 60 Gewichtsprozent geriebener oder gemahlener Mischung mit 60 bis 40 Gewichtsprozent gemahlenen oder geriebenen Naturkäses mischt.

9. Verfahren gemäß Anspruch 7 oder 8, **dadurch gekennzeichnet, dass** man als Stabilisatoren Maltodextrin und modifizierte Stärke und als Verdickungsmittel Johannisbrotkernmehl, das zuvor in Pflanzenöl aufgelöst wurde, hinzufügt.

10. Verfahren gemäß einem der vorgenannten Ansprüche, **dadurch gekennzeichnet, daß** man, außer dem Stabilisator und Verdickungsmittel, andere Zutaten hinzufügt, die aus der hiernach aufgeführten Gruppe gewählt sind: Salz, Aromastoffe, Gewürze.
